# EUROPEAN PATENT APPLICATION

(11) **EP 2 871 264 A1**
(43) Date of publication of application: **13.05.2015**
(21) Application number: 13192372.4
(22) Date of filing: 11.11.2013
(51) Int. Cl.: C25B 1/04, C25B 9/10, H01M 8/06, H01M 8/04, H01M 8/10

(54) **Test station and method for testing membrane electrode assemblies and electrodes**

(71) Applicant: The European Union, represented by the European Commission, 1049 Brussels (BE)
(72) Inventor: Radev, Ivan, 1592 SOFIA (BG); Tsotridis, Georgios, 1816 KH Alkmaar (NL)
(74) Representative: Office Freylinger

(57) **Abstract**

A test station for testing electrode assemblies MEAs and electrodes, the test station (10) comprising:
a main gas chamber (14) arranged within a chamber body (12), the main gas chamber (14) comprising a gas inlet (18) and a gas outlet (20) designed for hermetically sealing the main gas chamber (14);
at least one auxiliary gas chamber (16) arranged within the main gas chamber (14), each auxiliary gas chamber (16) comprising a gas inlet (18') and a gas outlet (20') designed for hermetically sealing the auxiliary gas chamber (16);
at least one fuel cell MEA (26, 26') and at least one electrolyzer MEA (28, 28') connected to a current/voltage source (40) via a circuit (38), the fuel cell MEA (26) and electrolyzer MEA (28) forming opposite wall portions of the auxiliary gas chamber (16). A method for testing electrode assemblies MEAs and electrodes using such a test station (10).

## Description

### FIELD OF THE INVENTION

The present invention generally relates to a test station for MEAs (Membrane Electrode Assemblies) and electrodes. The present invention also relates to a method for carrying out such tests.

### BACKGROUND OF THE INVENTION

The conventional testing of fuel cells, water electrolyzers and unitized regenerative fuel cells (Electrochemical Hydrogen Energy Converters - EHEC) generally requires a heavy, complex and expensive running periphery for continuous conditioning, supply and removal of the gas mixtures and products at conditions and compositions under strict control.

Cell design and the methodology for establishing and controlling of the optimal working conditions (water and heat management, composition and stoichiometry of the feeding gases, reaction products removal, total gas pressure, pressure regulation on both sides of MEA, etc.) of each single cell in the stack) depend strongly on the PEM fuel cell and water electrolyzer power and application. The most important element - "the heart" of any PEM EHEC, which mostly determines their performance, durability, and their cost, is the MEA. Furthermore, MEA is the most independent element in terms of EHEC scale, design and application. The dynamics and interdependence of the cell parameters, the difficulties in maintaining the running conditions, typical for conventional test cells, are the main hindrances for a deeper understanding of the driving reaction and degradation mechanisms and effect of impurities on the MEA performance and durability. Moreover, the continuous supply and removal of the reagents and products do not allow accumulation of degradation products in enough concentrations for their precise detection and quantification. Thus, the electrochemical testing of MEA's active materials, electrode structures and preparation procedures requires conception, development and implementation of a harmonized, reliable for testing many MEAs simultaneously under precisely adjusted testing conditions, preferably standardized, fast and easy - to - realize screening technology.

### OBJECTIVE OF THE INVENTION

The objective of the present invention is to provide a test station wherein MEAs can be tested reliably, quickly and in a cost effective manner. This objective is achieved by a test station according to claim 1. Another objective of the present invention is to provide a method for testing MEAs. This objective is achieved by a method according to claim 10.

### SUMMARY OF THE INVENTION

The present invention proposes a test station for testing membrane electrode assemblies, the test station comprises a main gas chamber arranged within a chamber body, the main gas chamber comprising a gas inlet and a gas outlet designed for hermetically sealing the main gas chamber; at least one auxiliary gas chamber arranged within the main gas chamber, each auxiliary gas chamber comprising a gas inlet and a gas outlet designed for hermetically sealing said auxiliary gas chamber; and at least one fuel cell MEA and at least one electrolyzer MEA connected to a current/voltage source via a circuit, the fuel cell MEA and electrolyzer MEA forming opposite wall portions of the auxiliary gas chamber.

The testing concept of the present test station is based on an electrical, gaseous and water coupling of MEAs for fuel cell and water electrolysis. Alternating MEAs for fuel cell and water electrolyzer are electrically connected in series via gas and water permeable current collectors with hydrogen and oxygen gas compartments for their hydrogen and oxygen electrodes, respectively. Thus, the reagents for the fuel cell MEA are provided directly by the water electrolyzer MEA and vice versa. The same principle is valid for the products since the reagents for the fuel cell MEAs are the products of the water electrolyzer MEA and vice versa. Due to the equal amount of electricity passing through the MEAs, self-maintained and reproducible experimental conditions are achieved without the need of external for the testing cell conditioning periphery and continuous gas supply. The test station comprises a main gas chamber (which may also be referred to as humidification compartment) that, depending on the testing electrodes (hydrogen or oxygen), is filled either with oxygen or hydrogen containing gas.

If oxygen electrode degradation or influence of specific impurities for each MEA under test on their performance is of interest, then the main gas chamber is filled with hydrogen containing gas, while the auxiliary gas chamber between oxygen electrodes is filled with oxygen containing gas. If, on the other hand, hydrogen electrode degradation or influence of impurities on their performance is of interest, then the main gas chamber is filled with oxygen containing gas, while the auxiliary gas chamber between hydrogen electrodes is filled with hydrogen containing gas.

Preferably, each MEA comprises a proton exchange membrane PEM sandwiched between two PEM electrodes. A reference electrode may be connected to the proton exchange membrane, the reference electrode being connected to a voltage sense circuit comprising the electrodes of the MEA. A voltmeter device may be arranged between the reference electrode and the voltage sense circuit. The reference electrode is preferably arranged in a hydrogen environment.

Advantageously, the main gas chamber comprises a water management device, in particular a Peltier element. The humidification of the gases may be performed by one or more such Peltier elements. Their warmer side is in thermal contact with the chamber body while the cooler side may be in contact with a substrate soaked with water situated in a vessel made of thermal insulator material, plastic or other. The vessel ensures the thermal and mechanical contact between the cooler part of the Peltier and the tissue soaked water and preserves the MEAs from water droplets. The effective control of the humidity in the cell chamber is performed by controlling the temperature of the MEAs and the water temperature in the pan. The external cooling of the Peltier element is useful to ensure constant temperature of the cooler side preventing heat damage of the Peltier.

According to a preferred embodiment of the present invention, the main gas chamber comprises a plurality of auxiliary gas chambers, wherein partition walls between neighbouring auxiliary gas chambers are formed by MEAs. Each auxiliary gas chamber is common for two hydrogen electrodes (fuel cell anode and water electrolyzer cathode) of the neighbour MEAs or two oxygen electrodes (fuel cell cathode and water electrolyzer anode) of the neighbour MEAs. A number of MEAs are thus connected in series and the electrochemical reaction between the outer electrodes connected to the current/voltage source extends over a range of alternating gas environments.

Advantageously, the main gas chamber comprises 2N-1 auxiliary gas chambers and 2N MEAs, N being a positive integer. Indeed, the number of MEAs for fuel cell and water electrolysis should be equal, thus the total number of the MEAs in the test station should be even.

Each auxiliary gas chamber may comprise sealable gas communication openings between the auxiliary gas chamber and the main gas chamber.

If hydrogen electrode degradation or influence of specific impurities for each MEA under test on their performance is of interest, then the main gas chamber is filled with oxygen containing gas. Auxiliary gas chambers containing oxygen electrodes are also filled with oxygen containing gas. Gas communication openings of these auxiliary gas chambers with the main gas chamber are therefore open. On the other hand, the gas communication openings of the other auxiliary gas chambers are sealed so that they can be filled with hydrogen containing gas.

Due to the working principle of the present test station, if the membranes of the MEAs under test are of the same type and thickness, the water transport phenomena like water drag and back diffusion will not change the water content in the auxiliary gas chambers between the MEAs. Only the hydrogen crossover can lead to accumulation of excess water in the auxiliary gas chambers comprising oxygen and to significantly lesser extend the oxygen crossover will generate water in the auxiliary gas chambers comprising hydrogen.

It should be noted also that the current/voltage supplied to the cells by the current/voltage source may be either AC or DC.

The present invention also concerns a method for testing membrane electrode assemblies MEAs and electrodes, the method comprising:
providing a test station having a main gas chamber and at least one auxiliary gas chamber arranged within the main gas chamber, two opposite wall portions of the auxiliary gas chamber being formed by a fuel cell MEA and an electrolyzer MEA respectively;
connecting the MEAs to a circuit comprising a current/voltage source;
feeding one of a hydrogen containing gas and an oxygen containing gas into the main gas chamber until the desired gas composition is achieved in the main gas chamber and hermetically sealing the main gas chamber;
feeding the other one of a hydrogen containing gas and an oxygen containing gas into alternate ones of the auxiliary gas chambers until the desired gas composition is achieved in the auxiliary gas chambers and hermetically sealing the auxiliary gas chambers, wherein intermediate auxiliary gas chambers are fed the same gas as the main gas chamber;
applying a current/voltage to the MEAs; and
measuring the MEAs and electrodes performance.

The method according to claim 10, wherein measuring the MEAs and electrodes performance comprises at least one of steady and quasi-steady state polarization (obtaining polarization curves), potentiostatic measurements, galvanostatic measurements, cycling voltammetry methods, current interrupt methods, ac resistance methods, electrochemical impedance methods.

Based on the measurement, MEA and electrode performance can be determined under various testing conditions and aging stages, quantification of the electrodes performance limitations (kinetic, ohmic - proton and electron resistance, diffusion), the electrochemically active surface area, the electrocatalyst activity, the degradation rate of the electrodes as a function of the operating conditions and aging current and/or potential cycles as well as the influence of the gas impurities and degradation products on the MEAs and electrodes performance and aging. Additional information regarding the aging processes can be obtained via analyzing the chemical content of the gaseous atmosphere of the testing station chambers. The lack of externally supplied and exhaust gasses (tests are performed under sealed gaseous atmosphere) enables accumulation of the degradation products in high concentrations for precise and unambiguous detection and interpretation of the degradation processes as a function of the testing conditions and time. The proposed testing cell can be used for testing and qualification of different gas diffusion layers, proton electrolyte membranes, electrocatalysts, architectures of the electrocatalyst layers, etc. The present test station can elucidate problems related to fuel cell and water electrolyzer coupling like components compatibility, reagents and products transport, the effect of accumulation of side reaction products on the performance and efficiency of the electrochemical hydrogen energy conversion cycle (the amount of electricity that passes through the test station is exactly the amount of the energy losses in the electrochemical hydrogen energy conversion), etc. Due to its operating principle the proposed testing cell avoids the need of hydrogen storage media facilitating testing of fuel cell and water electrolyzer coupling.

Based on the comprehensive results obtained, conclusion for the most relevant and cost-effective strategies for MEAs and electrodes performance optimization can be drawn. Along with the simplification of the multi-MEAs tests the proposed testing cell and its operating principle ensures absolute reproducibility of the testing conditions required for reliable and standardized characterization, comparison and qualifying of MEAs and electrodes performance.

The present method allows for simultaneous electrochemical testing of numerous MEAs in fuel cell and water electrolyzer modes without the need of external conditioning reagents supply and products exhaust peripheries. The method offers self-regulating running mechanism which ensures absolute reproducibility of the working conditions required for standardized characterization, comparison and qualifying of MEAs and electrodes performance.

The present method allows for identifying the problems related to fuel cell and water electrolyzer coupling like components compatibility, reagents and products transport, the effect of accumulation of side reaction products on the performance and efficiency of the electrochemical hydrogen energy conversion cycle (the amount of electricity that passes through the test station is exactly the amount of the energy losses in the electrochemical hydrogen energy conversion), etc. Due to its operating principle the proposed testing cell avoids the need of hydrogen storage media facilitating testing of fuel cell and water electrolyzer coupling.

The method offers degradation studies of the MEAs, electrodes and components based on the accumulation of the degradation products in the absence of externally supplied reagents and products exhaust.

The present method allows for studying the influence of the accumulation of the degradation products on the performance, aging and degradation behavior of the MEAs, electrodes and materials.

The present method allows for studying the influence of the impurities on the performance and durability of the electrodes and MEAs.

The present method allows for long-term, durability and aging tests of MEAs, electrodes and components.

The present method allows for studying the gas diffusion limitations of various electrode structures and porous current collectors via dilution of the reagents with an inert toward the electrochemical reactions gases.

Some of the advantages of the present test station can be summarized as follows:
- Possibilities for simultaneous electrochemical testing of numerous MEAs for fuel cells and water electrolyzers under identical or specific for each MEA experimental conditions.
- Avoid the use of the conditioning, supplying/removing of the reagents/products running peripheries. The desired gas mixtures can be obtained or supplied directly in the gas chamber where they are appropriately conditioned.
- Facilitate the understanding of MEA degradation mechanisms under various experimental conditions by accumulation of the degradation products during testing in the absence of conditioning periphery, externally supplied and exhaust gases.
- Simultaneous testing of equal MEAs toward different impurities, simultaneous testing of different MEAs toward equal impurities or simultaneous testing of different MEAs toward different impurities.
- Accurate and easy identification of the effects of the hydrogen and oxygen impurities and/or degradation products on the electrode performance for establishment of the tolerant levels of the electrocatalysts under investigation.
- The proposed test station presents the electrochemical hydrogen energy conversion cycle (hydrogen is produced by the water electrolyzer MEA and in the same time and at the same amount is consumed by the fuel cell MEA). Thus, the amount of electricity that passes through the test station is exactly the amount of the energy losses in the electrochemical hydrogen energy conversion. The present test station can elucidate problems related to fuel cell and water electrolyzer coupling like the effect of accumulation of side reaction products on the performance, durability of the MEAs and efficiency of the electrochemical hydrogen energy conversion cycle. Due to its operating principle the proposed testing cell avoids the need of hydrogen storage media (hydrogen is generated onboard) facilitating testing of fuel cell and water electrolyzer coupling.
- Offer studies on gas diffusion limitations and MEAs structural optimization by varying the gas diffusion layers and porous current collectors and/or partial pressure of the reactive gas via dilution with an inert gas (He, Ar, N etc).
- Self-recirculating of reagents and products at constant stoichiometry.
- Less need of alarm sensors and detectors as the experiments proceed in increased safety (limited amount of reactive gases, absence of externally and continuously supplied and exhaust gases).
- Easy realizable (self balanced) but precise control of reproducible working conditions (temperature, total gas pressure, gas composition, gas flows, reactants partial pressures including water) which makes the present test station ideal for MEAs and electrodes performance comparison and qualifying.
- Important cost reduction and resources saving (no need of conditioning periphery, continuous reagents supply and products exhaust) in R&D laboratory.

### BRIEF DESCRIPTION OF THE DRAWINGS

The present invention will now be described, by way of example, with reference to the accompanying drawings, in which:
FIG. 1: is a schematic illustration of a test station according to the present invention for preferably testing oxygen electrodes;
FIG. 2: is a schematic illustration of a test station according to the present invention for preferably testing hydrogen electrodes;
FIG. 3: is a schematic illustration of a test station according to the present invention for preferably testing multiple oxygen electrodes; and
FIG. 4: is a schematic illustration of a test station according to the present invention for preferably testing multiple hydrogen electrodes.

### DETAILED DESCRIPTION OF PREFERRED EMBODIMENTS

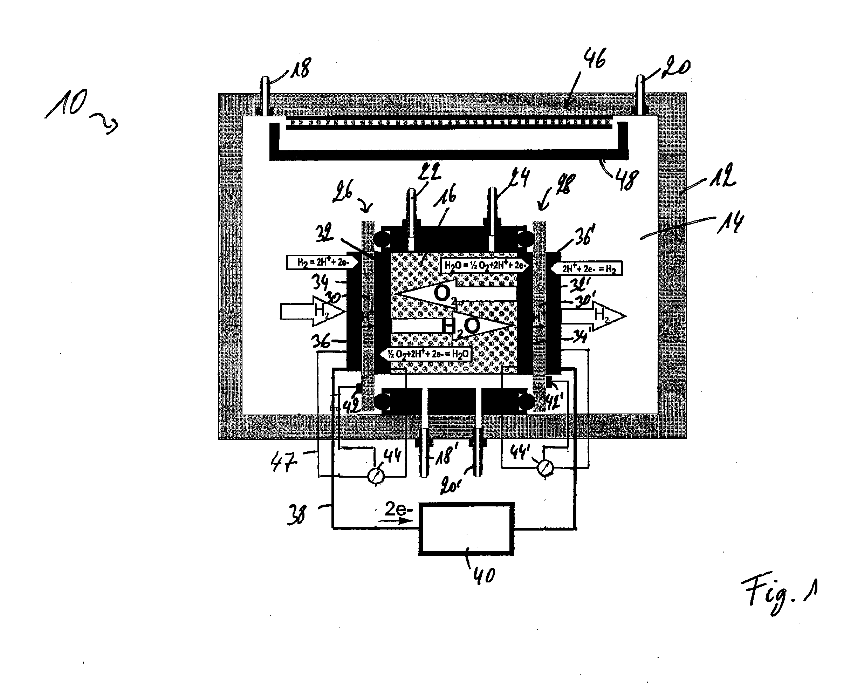

A first embodiment of a test station 10 for testing membrane electrode assemblies (MEAs) is shown in Fig.1.

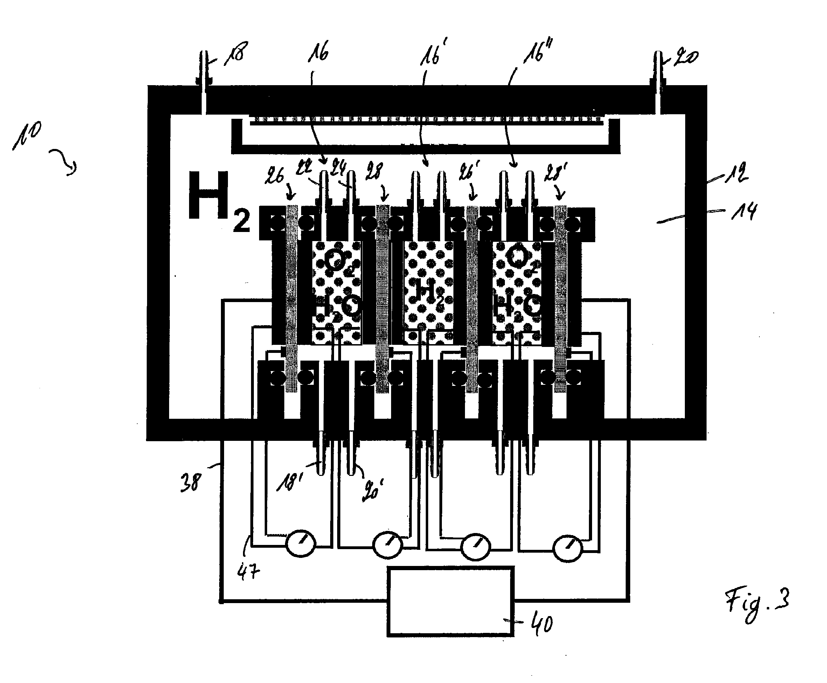

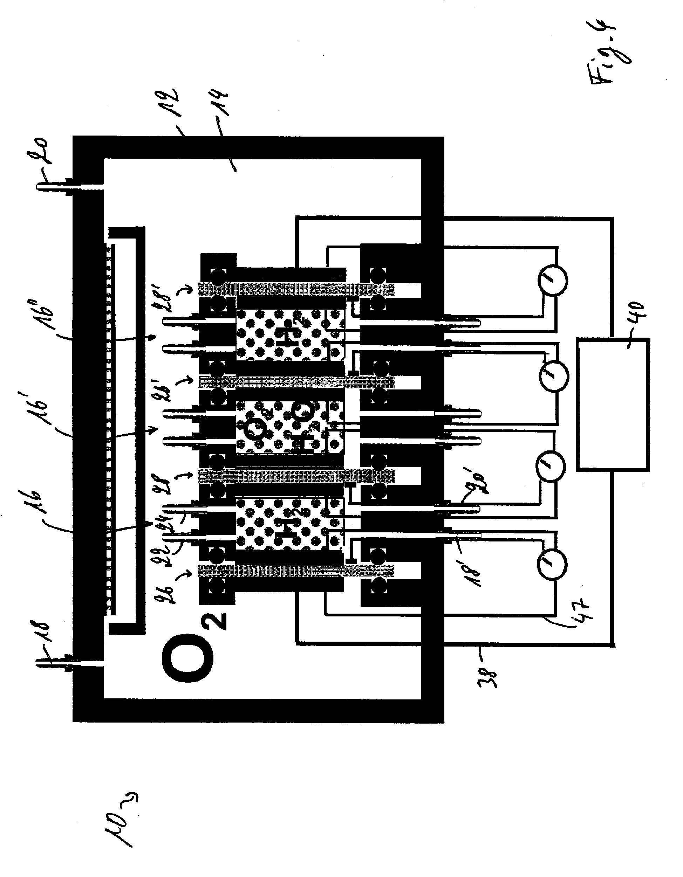

The test station 10 comprises a chamber body 12 comprising a main gas chamber 14, within which a smaller, auxiliary gas chamber 16 is arranged. Each gas chamber 14, 16 is provided with a gas inlet 18, 18' and a gas outlet 20, 20'. The gas inlets and outlets 18, 18', 20, 20' are advantageously formed by needle valves in order to be able to control the precise amount of gas fed into and out of the gas chamber 14, 16. In addition to the gas inlets and outlets 18', 20', the auxiliary gas chamber 16 comprises gas communication openings 22, 24 for allowing an exchange of gasses between the main and auxiliary gas chambers 14, 16. These gas communication openings 22, 24 are preferably also formed by needle valves in order to be able to precisely control amount of gas exchanged. The gas communication openings 22, 24 and their use will be described more closely hereunder when referring to Figs 3 and 4. The gas inlets and outlets 18', 20' can be used also for water drainage.

In the embodiment shown in Fig.1, the main gas chamber 14 is filled with a hydrogen containing gas, while the auxiliary gas chamber 16 is filled with an oxygen containing gas. The gas communication openings 22, 24 are closed so that no gas exchange is possible. After the hydrogen containing gas has been fed into the main gas chamber 14, the main gas chamber 14 is hermetically sealed so as to maintain precise gas conditions within the chamber. Similarly, after the oxygen containing gas has been fed into the auxiliary gas chamber 16, the auxiliary gas chamber 16 is hermetically sealed.

Two opposite wall portions of the auxiliary gas chamber 16 are formed by two MEAs, a fuel cell MEA 26 (i.e. an MEA operating in fuel cell mode) and an electrolyzer MEA 28 (i.e. an MEA operating in electrolyzer mode). Each MEA 26, 28 comprises a proton exchange membrane (PEM) 30, 30' sandwiched between two PEM electrodes 32, 32', 34, 34', one acting as cathode 32, 32', the other acting as anode 34, 34'. As is well known in the art, the PEM is permeable to protons but impermeable to electrons. Indeed, the PEM allows the transport of the protons but forces the electrons to travel through an external power circuit 38. A catalyst layer 36, 36' is in contact with the membrane 30, 30' and is part of the electrodes 32, 32', 34, 34'.

The cathode 32, 32' and anode 34, 34' are electrically linked via a circuit 38 to an external current/voltage source 40.

A reference electrode 42, 42' is furthermore connected to the membrane 30, 30'. The reference electrode 42, 42' is preferably connected to the voltage sense circuit 47 comprising a voltmeter device 44, 44'.

As is well known by the skilled person, water management is crucial for the performance of MEAs. Water content determines the proton conductivity, depending on the mode (fuel cell or water electrolyzer) water can be reagent, product or can limit the gas transport and even change the electrochemical reactions. In the embodiment shown in Fig.1, water management is realized by incorporating a Peltier element 46 in the main gas chamber 14. Its cooler side is in contact with a water soaked substrate 48, while the warmer one is in contact with the chamber body 12. Thus, the lowest temperature inside the main gas chamber 14 determines the water partial pressure.

The test station 10 is provided with an opening (not shown) in the chamber body 12 for passing the auxiliary chamber 16 therethrough. Such an opening is used to introduce the auxiliary chamber 16 with the associated MEAs 26, 28 into the main gas chamber 14 before the test and to remove them therefrom after the test. The opening and its associated gate (not shown) are designed such that a hermetic seal is formed between the gate and the chamber body 12.

In the test station shown in Fig.1, the auxiliary gas chamber 16 is filled with an oxygen containing gas. After the oxygen containing gas has been fed into the auxiliary gas chamber 16, the auxiliary gas chamber 16 is hermetically sealed so as to maintain precise gas conditions within the chamber 16. The auxiliary gas chamber 16 is then introduced into the main gas chamber 14. After sealing the auxiliary gas chamber 16 within the main gas chamber 14, the latter is filled with an inert gas such as He, Ar, N₂ etc. and then with hydrogen containing gas. The purpose of the inert gas is to evacuate the air prior to filling with hydrogen, thus avoiding the electrodes degradation and formation of air-hydrogen explosive mixtures in the presence of nanosized catalysts. After the hydrogen containing gas has been fed into the main gas chamber 14, the main gas chamber 14 is hermetically sealed so as to maintain precise gas conditions within the chamber. As will be seen later, it is also possible to fill the main and auxiliary gas chambers 14, 16 with their respective gasses after sealing of the auxiliary gas chamber within the main gas chamber. It is also possible that the main chamber is used as a humidification and conditioning chamber also for the gases purposed for the auxiliary chambers.

The anode 34 of the fuel cell MEA 26 consumes hydrogen by oxidizing H₂ to protons and electrons by the so-called Hydrogen Oxidation Reaction (HOR). These protons reach the cathode 32 and interact with the oxygen of the oxygen containing gas in the auxiliary chamber 16 and electrons to form H₂O by the so-called Oxygen Reduction Reaction (ORR).

The anode 34' of the electrolyzer MEA 28 splits H₂O to protons, electrons and O₂ by the so-called Oxygen Evolution Reaction (OER). These protons reach the cathode 32', react with electrons and convert to H₂ by the so-called Hydrogen Evolution Reaction (HER).

It should be noted that the reference electrodes 42, 42' are exposed to the hydrogen environment.

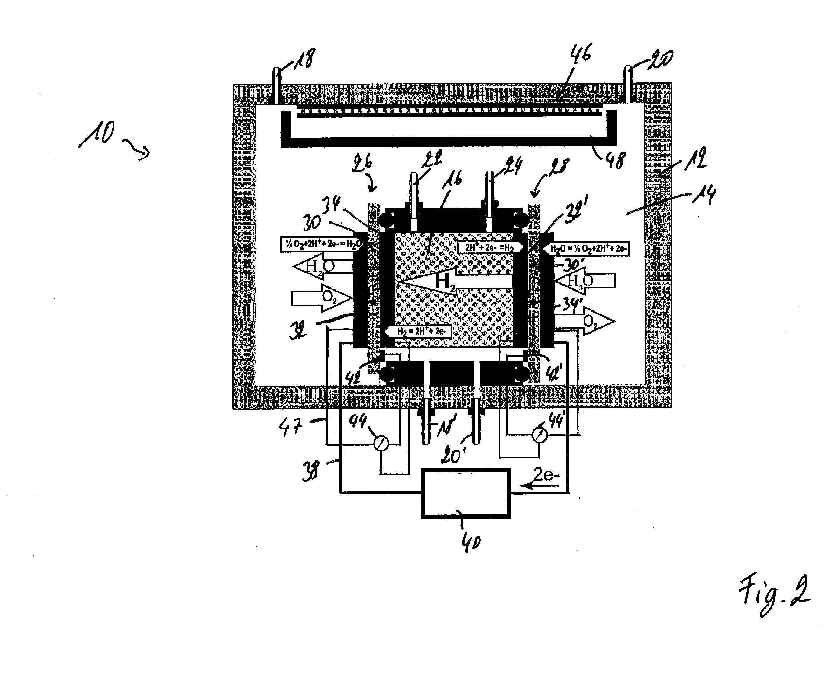

The test station of Fig.2 is structurally identical to that shown in Fig.1. However the atmospheres in the gas chambers are inversed.

In the test station shown in Fig.2, the auxiliary gas chamber 16 is filled with a hydrogen containing gas. Prior to filling with a hydrogen containing gas, an inert gas such as He, Ar, N₂ etc. is introduced in the gas chamber 16. The purpose of the inert gas is to evacuate the air prior to filling with hydrogen, thus avoiding the electrodes degradation and formation of air-hydrogen explosive mixtures in the presence of nanosized catalysts. After the hydrogen containing gas has been fed into the auxiliary gas chamber 16, the auxiliary gas chamber 16 is hermetically sealed so as to maintain precise gas conditions within the chamber 16. The auxiliary gas chamber 16 is then introduced into the main gas chamber 14. After sealing the auxiliary gas chamber 16 within the main gas chamber 14, the latter is filled with an oxygen containing gas. After the oxygen containing gas has been fed into the main gas chamber 14, the main gas chamber 14 is hermetically sealed so as to maintain precise gas conditions within the chamber. Again, the main and auxiliary gas chambers 14, 16 can be filled with their respective gasses after sealing of the auxiliary gas chamber within the main gas chamber. It is also possible that the main chamber is used as a humidification and conditioning chamber also for the gases purposed for the auxiliary chambers.

The anode 34 of the fuel cell MEA 26 consumes hydrogen by oxidizing H₂ to protons and electrons by the so-called Hydrogen Oxidation Reaction (HOR). These protons reach the cathode 32 and interact with oxygen and electrons to H₂O by the so-called Oxygen Reduction Reaction (ORR).

The anode 34' of the electrolyzer MEA 28 splits water to oxygen, protons and electrons by the so called Oxygen Evolution Reaction (OER). These protons reach the cathode 32' and interact with electrons to form H₂ in the auxiliary chamber 16 by the so-called Hydrogen Evolution Reaction (HER).

It should be noted again that the reference electrodes 42, 42' are exposed to the hydrogen environment.

Figs 3 and 4 show a similar test station, wherein more than one auxiliary gas chamber 16 is used. Indeed, the illustrated test chamber comprises three auxiliary gas chambers 16, 16', 16" with four MEAs 26, 28, 26', 28' forming sidewalls of the auxiliary gas chambers 16, 16', 16".

A first fuel cell MEA 26 forms a wall portion of a first auxiliary gas chamber 16. A first electrolyzer MEA 28 forms an opposite wall portion of the first auxiliary gas chamber 16 and, at the same time, a wall portion of a second auxiliary gas chamber 16'. A second fuel cell MEA 26' then forms an opposite wall portion of the second auxiliary gas chamber 16' and, at the same time, a wall portion of a third auxiliary gas chamber 16". Finally, a second electrolyzer MEA 28' forms the opposite wall portion of the third auxiliary gas chamber 16".

In Fig.3, the main gas chamber is filled with a hydrogen containing gas. Prior to filling with a hydrogen containing gas, an inert gas such as He, Ar, N₂ etc. is introduced in the gas chamber 16. The purpose of the inert gas is to evacuate the air prior to filling with hydrogen, thus avoiding the electrodes degradation and formation of air-hydrogen explosive mixtures in the presence of nanosized catalysts. While the first and third auxiliary gas chambers 16, 16" are filled with an oxygen containing gas, the second auxiliary gas chamber 16', on the other hand, is filled with a hydrogen containing gas. Indeed, the gas communication openings 22, 24 of the second auxiliary gas chamber 16' are open so as to allow a gas exchange between the main gas chamber 14 and the second auxiliary gas chamber 16'. The communication openings of the other auxiliary gas chambers 16, 16" are closed. It is also possible that the main chamber is used as a humidification and conditioning chamber also for the gases purposed for the auxiliary chambers.

In Fig.4, the main gas chamber is filled with an oxygen containing gas. While the first and third auxiliary gas chambers 16, 16" are filled with a hydrogen containing gas, the second auxiliary gas chamber 16', on the other hand, is filled with an oxygen containing gas. Prior to filling with a hydrogen containing gas, an inert gas such as He, Ar, N₂ etc. is introduced in the gas chamber 16. The purpose of the inert gas is to evacuate the air prior to filling with hydrogen, thus avoiding the electrodes degradation and formation of air-hydrogen explosive mixtures in the presence of nanosized catalysts. Indeed, the gas communication openings 22, 24 of the second auxiliary gas chamber 16' are open so as to allow a gas exchange between the main gas chamber 14 and the second auxiliary gas chamber 16'. The communication openings of the other auxiliary gas chambers 16, 16" are closed. It is also possible that the main chamber is used as a humidification and conditioning chamber also for the gases purposed for the auxiliary chambers.

The present test stations allow independent testing of each MEA at self-maintained and constant activities of reagents and products adjusted before the experiment.

The test station according to the present invention offers four general testing scenarios (including combinations of them):
(i) Fuel cell testing where optionally the oxygen electrode degradation products / influence of specific impurities for each MEA under test on the electrode performance is of interest (Fig. 3);
(ii) Fuel cell testing where optionally the hydrogen electrode degradation products / influence of specific impurities for each MEA under test on the electrode performance is of interest (Fig. 4);
(iii) Water electrolysis testing where optionally the oxygen electrode degradation products / influence of specific impurities for each MEA under test on the electrode performance is of interest (Fig. 3);
(iv) Water electrolysis testing where optionally the hydrogen electrode degradation products / influence of specific impurities for each MEA under test on the electrode performance is of interest (Fig. 4).

It is also possible to collect the data simultaneously obtained for both modes - fuel cell and water electrolyzer.

For all four general testing scenarios, the test station itself is the same. For fuel cells degradation testing (i) and (ii), when degradation products are of interest, it is recommended that dimensionally stable electrodes are used for the water electrolyzer MEA. Thus, the water electrolyzer electrodes will not contaminate the atmosphere with additional degradation products. The same reasoning is valid when water electrolysis is of interest (iii) and (iv); it is recommended that dimensionally stable fuel cell electrodes are used. Depending on the MEA performance and testing needs, the electrode geometric area of the MEAs for fuel cell and water electrolyzer can vary. For instance, if the fuel cell is of interest, in order to suppress possible degradation products of the water electrolyzer MEA, its geometric area can be bigger than that of the fuel cell one, thus decreasing the current density, respectively the electrodes overpotential of the water electrolyzer MEA. If the water electrolysis is of interest, the electrode geometric area of the fuel cell MEA should be enough for testing the water electrolysis in the current density range of interest. On the other hand, the bigger is the electrode geometric area of the fuel cell MEA the lower is the current density, respectively the higher is the cell voltage/cathode potential which can accelerate the degradation of the fuel cell MEA. The electrode geometric area ratio between the fuel cell and water electrolyzer MEAs should be carefully adapted regarding the testing needs.

When oxygen electrodes degradation products / influence of specific impurities for each MEA under test on the electrode performance are of interest, i.e. testing scenarios (i) and (iii), the main gas chamber 14 is filled with hydrogen containing gas and is common for all of the hydrogen electrodes of the MEAs (Fig. 3). The gas communication openings 22, 24 between the auxiliary gas chamber 16' containing hydrogen electrodes are open to the main gas chamber 14 and the communication openings 22, 24 between the auxiliary gas chambers 16, 16" containing oxygen electrodes and the main gas chamber 14 are closed. Thus, individual oxygen compartments between the oxygen electrodes of two neighbouring MEAs are formed. Excess water generated via hydrogen crossover inside the individual oxygen compartments can be drained through the gas inlets or outlets 18', 20'.

The supply of gases before the test may be performed in several steps as follows:

Firstly, the oxygen containing gas is supplied to the main gas chamber 14 and the gas communication openings 22, 24 of the individual auxiliary gas chambers are open. After sufficient gas is fed into the main gas chamber 14 and the auxiliary gas chambers 16, 16' and 16", the gas communication openings 18 and 20 are closed. After conditioning and humidifying the oxygen containing gas, the communication openings 22 and 24 of the auxiliary chamber 16 and 16" are closed. The main gas chamber 14 and auxiliary gas chamber 16' are purged with an inert gas (nitrogen, argon, helium, etc), after which they are filled with hydrogen containing gas and humidified to the desired level.

When hydrogen electrodes degradation products / influence of specific impurities for each MEA under test on the electrode performance are of interest, i.e. testing scenarios (ii) and (iv), the main gas chamber 14 is filled with oxygen containing gas and is common for all of the oxygen electrodes of the MEAs (Fig. 4). The gas communication openings 22, 24 between auxiliary gas chambers containing oxygen electrodes are open to the main gas chamber 14 and the gas communication openings 22, 24 between the auxiliary gas chambers 16, 16" containing hydrogen electrodes are closed. Thus, individual hydrogen compartments between the hydrogen electrodes of two neighbouring MEAs are formed. Excess water generated via hydrogen crossover inside the humidification compartment common for all oxygen electrodes will condensate in the humidification vessel and drained from the auxiliary chamber 16' via gas inlets or outlets 18', 20', represented by lower needle valves.

The supply of gases before the test may be performed in several steps as follows: Firstly, the main gas chamber 14 and the auxiliary gas chambers 16, 16' and 16" are purged with an inert gas (nitrogen, argon, helium, etc). After that, hydrogen is introduced and conditioned and the gas communication openings 22, 24 of the auxiliary gas chambers 16, 16" are open. After filling with conditioned hydrogen, the gas communication openings 22, 24 of the auxiliary gas chambers 16, 16" are closed. The main gas chamber 14 and the auxiliary gas chamber 16' are purged with nitrogen and after that oxygen containing gas is introduced and conditioned.

In the four testing scenarios, depending on the testing duration, the gases consumed by non-faradic processes, e.g. hydrogen crossover can be refilled through the gas inlets and outlets 18', 20' of the auxiliary gas chambers 16, 16', 16" and the gas inlets and outlets 18, 20 of the main gas chamber 14. The samples for analysis of the accumulated degradation products can be taken through the individual gas inlets and outlets 18', 20' of the auxiliary gas chambers 16, 16', 16". It is also possible to analyse the gas composition of the main chamber.

Regarding the testing of the influence of impurities on the electrode performance of the electrodes, identical MEAs can be tested simultaneously to different impurities, different MEAs can be tested simultaneously toward the same impurities or different MEAs can be tested simultaneously toward different impurities. Before introduction of various gas impurities to the individual gas compartments, they can be humidified in the main gas chamber.

When the electrodes potential is of interest, a small piece of Pt gas diffusion electrode can be attached to the membrane from its hydrogen electrode side, thus the electrodes potential will be referred to the reference hydrogen electrode.

**REFERENCE NUMERALS**

| | | | |
|---|---|---|---|
| 10 | test station | 22 | gas communication opening |
| 12 | chamber body | 24 | gas communication opening |
| 14 | main gas chamber | 26 | fuel cell MEA |
| 16 | auxiliary gas chamber | 26' | fuel cell MEA |
| 16' | auxiliary gas chamber | 28 | electrolyzer MEA |
| 16" | auxiliary gas chamber | 28' | electrolyzer MEA |
| 18 | gas inlet | 30 | proton exchange membrane (PEM) |
| 18' | gas inlet | | |
| 20 | gas outlet | 30' | proton exchange membrane (PEM) |
| 20' | gas outlet | | |
| 32 | PEM fuel cell cathode | | |
| 32' | PEM electrolyzer cathode | | |
| 34 | PEM fuel cell anode | | |
| 34' | PEM electrolyzer anode | | |
| 36 | catalyst layer | | |
| 36' | catalyst layer | | |
| 38 | power circuit | | |
| 40 | external current source | | |
| 42 | reference electrode | | |
| 42' | reference electrode | | |
| 44 | voltmeter device | | |
| 44' | voltmeter device | | |
| 46 | Peltier element | | |
| 47 | voltage sense circuit | | |
| 48 | water soaked substrate | | |

## Claims

1. A test station for testing electrode assemblies MEAs and electrodes, said test station (10) comprising:
a main gas chamber (14) arranged within a chamber body (12), said main gas chamber (14) comprising a gas inlet (18) and a gas outlet (20) designed for hermetically sealing said main gas chamber (14);
at least one auxiliary gas chamber (16) arranged within said main gas chamber (14), each auxiliary gas chamber (16) comprising a gas inlet (18') and a gas outlet (20') designed for hermetically sealing said auxiliary gas chamber (16);
at least one fuel cell MEA (26, 26') and at least one electrolyzer MEA (28, 28') connected to a current/voltage source (40) via a circuit (38), said fuel cell MEA (26) and electrolyzer MEA (28) forming opposite wall portions of said auxiliary gas chamber (16).

2. The test station according to claim 1, wherein each MEA (26, 26', 28, 28') comprises a proton exchange membrane PEM (30, 30') sandwiched between two PEM electrodes (32, 34, 32', 34').

3. The test station according to any of the preceding claims, wherein a reference electrode (42, 42') is connected to said proton exchange membrane (30, 30'), said reference electrode (42, 42') being connected to a power circuit (38) comprising said current/voltage source (40).

4. The test station according to claim 3, wherein a voltmeter device (44, 44') is arranged between said reference electrode (42, 42') and a voltage sense circuit (47).

5. The test station according to claim 3 or 4, wherein said reference electrode (42, 42') is arranged in a hydrogen environment.

6. The test station according to any of the preceding claims, wherein said main gas chamber (14) comprises a water management device, in particular, a Peltier element (46).

7. The test station according to any of the preceding claims, wherein said main gas chamber (14) comprises a plurality of auxiliary gas chambers (16, 16', 16"), wherein partition walls between neighbouring auxiliary gas chambers are formed by MEAs.

8. The test station according to claim 7, wherein said main gas chamber (14) comprises 2N-1 auxiliary gas chambers (16, 16', 16") and 2N MEAs (26, 26', 28, 28'), N being a positive integer.

9. The test station according to any of the preceding claims, wherein each auxiliary gas chamber (16, 16', 16") comprises sealable gas communication openings 22, 24 between said auxiliary gas chamber (16, 16', 16") and said main gas chamber (14).

10. A method for testing membrane electrode assemblies MEAs and electrodes, said method comprising:
- providing a test station (10) having a main gas chamber (14) and at least one auxiliary gas chamber (16) arranged within said main gas chamber (14), two opposite wall portions of said auxiliary gas chamber (16) being formed by a fuel cell MEA (26) and an electrolyzer MEA (28) respectively;
- connecting said MEAs (26, 28) to a power circuit (38) comprising a current/voltage source (40);
- feeding one of a hydrogen containing gas and an oxygen containing gas into said main gas chamber (14) until the desired gas composition is achieved in said main gas chamber (14) and hermetically sealing said main gas chamber (14);
- feeding the other one of a hydrogen containing gas and an oxygen containing gas into alternate ones of said auxiliary gas chambers (16, 16") until the desired gas composition is achieved in said auxiliary gas chambers (16, 16") and hermetically sealing said auxiliary gas chambers (16, 16"), wherein intermediate auxiliary gas chambers (16') are fed the same gas as the main gas chamber (14);
- applying a current/voltage to said MEAs (26, 26', 28, 28'); and
- measuring the MEAs and electrodes performance.

11. The method according to claim 10, wherein measuring the MEAs and electrodes performance comprises at least one of steady and quasi-steady state polarization (obtaining polarization curves), potentiostatic measurements, galvanostatic measurements, cycling voltammetry methods, current interrupt methods, ac resistance methods, electrochemical impedance methods.

12. Use of a test station according to any of claims 1 to 9 for testing membrane electrode assemblies.

13. Use according to claim 12 for testing degradation of oxygen electrodes or hydrogen electrodes in fuel cells or electrolysers.

14. Use according to claim 12 for testing the influence of impurities on the performance of oxygen electrodes or hydrogen electrodes in fuel cells or electrolysers.

15. Use according to claim 12 for testing the influence of the accumulated during operation degradation products on the performance and durability of the electrodes and MEAs in fuel cell and/or water electrolyzer modes.
